# EUROPEAN PATENT APPLICATION

(11) **EP 1 643 492 A1**
(43) Date of publication of application: **05.04.2006**
(21) Application number: 05021202.6
(22) Date of filing: 28.09.2005
(51) Int. Cl.: G11B 5/70, G11B 23/04

(54) **Magnetic tape cartridge**

(30) Priority: 30.09.2004 JP 2004288274
(71) Applicant: FUJI PHOTO FILM CO., LTD., Minami-Ashigara-shi, Kanagawa (JP)
(72) Inventor: Doushita, Hiroaki, Odwara-shi, Kanagawa (JP)
(74) Representative: HOFFMANN EITLE

(57) **Abstract**

A magnetic tape cartridge wherein a reel with magnetic tape wound thereon is rotatably housed within a cartridge case, the thickness of the magnetic tape being 7 µm or less and a reel hub constituting the reel being formed from a highly rigid material having a flexural rigidity of 5000 MPa or more.

## Description

### BACKGROUND OF THE INVENTION

### TECHNICAL FIELD OF THE INVENTION

The present invention relates to a magnetic tape cartridge. More particularly, it relates to a magnetic tape cartridge which exhibits an improved storage stability, especially an improved dimensional stability of a thinned magnetic tape.

### DESCRIPTION OF THE RELATED ART

Hitherto, in the field of electric computers, with miniaturization thereof and speeding up of the processing speed, there is an increasing demand for high density, high access speed, and high capacity of external memory devices such as magnetic disk devices. Since the size of a recording bit becomes small as recording density is enhanced, there is a problem that output decreases when reproduced by a magnetic head. For solving the problem, it has been advanced to develop a recording and reproducing device wherein a recording head and a reproduction head are separated from each other and there are used an electromagnetic induction type head for recording and an MR head (Magneto-Resistive Head) for reproduction, while both of recording and reproduction are carried out with one electromagnetic induction type head in the related art device.

The MR head is roughly classified into an AMR (Anisotropic Magneto-Resistance) head which utilizes an anisotropic magneto-resistance effect and a GMR (Giant Magneto-Resistance) head which utilizes a giant magneto-resistance effect. In particular, the AMR head is adopted in single-reel magnetic tape cartridges including DLT (Digital Linear Tape) and LTO (Linear Tape Open format cartridge) as representatives so as to take charge of reproduction in the recording/reproduction system of a magnetic tape.

Moreover, in the data cartridges in which tape-form magnetic recording media are housed, a large-capacity of data recording has been desired. Thus, as a means for increasing recording capacity per unit cassette, the thickness of the magnetic recording medium itself has been thinned so as to increase the volume of medium capable of being housed.

In the case that the thickness of the magnetic recording medium itself is thinned, there may be mentioned an enhancement of the elastic modulus of the medium itself as a method for improving flexural rigidity of the magnetic recording medium. In particular, the rigidity of a nonmagnetic support is of importance. Recently, in magnetic recording media having a thin thickness, polyethylene naphthalate and aramides having a high Young's modulus have been employed instead of polyethylene terephthalate hitherto mainly used.

However, with the progress of thinning of tapes and high density of recorded signals, storage stability becomes increasingly a significant problem.

Moreover, a magnetic tape is essentially removable as a prerequisite. Furthermore, since cassettes are necessarily removed also in a jukebox-type library under robotics operations, changes in use environment and changes in winding conditions toward cartridges are highly anticipated. Therefore, factors for dimensional changes of magnetic tapes are always present. Thus, there is a possibility that dimensional change hitherto not problematic may result in a fatal problem as tracking insufficiency.

For the purpose of avoiding the above problems, JP-A-2004-30809 discloses a magnetic recording medium comprising a magnetic layer provided on one side of a substrate composed of a biaxially oriented polyester film and having a rate of change in width size. However, the related art technology still has a room for improvement in storage stability and dimensional stability in the case that a high-density magnetic recording tape is thinned. For solving the above problems, as a result of extensive studies, the present inventors have found that thermal distortion in a wound state can be suppressed by thinning a magnetic tape and increasing the rigidity of a reel hub, and thus they have accomplished the invention. The present invention has been made in view of the circumstances mentioned above.

### SUMMARY OF THE INVENTION

It is an object of at least one embodiment of the invention to provide a magnetic tape cartridge which exhibits an improved storage stability, especially an improved dimensional stability of a thinned magnetic tape.

Namely, the invention is as follows.
1) A magnetic tape cartridge wherein a reel with magnetic tape wound thereon is rotatably housed within a cartridge case, the thickness of the above magnetic tape being 7 µm or less and a reel hub constituting the above reel being formed from a highly rigid material having a flexural rigidity of 5000 MPa or more.
2) The magnetic tape cartridge according to 1),
   wherein the above magnetic tape comprises a coated film layer containing a nonmagnetic layer and a magnetic layer in this order provided on a polymer support.
3) The magnetic tape cartridge according to 2),
wherein the glass transition point of the coated film layer is from 50°C to 110°C.

According to at least one embodiment of the invention, since a reel hub is formed from a highly rigid material having a flexural rigidity of 5000 MPa or more, thermal distortion of the reel hub can be suppressed under various use environments. Therefore, a magnetic tape cartridge with the reel hub can suppress dimensional change of the magnetic tape during storage for a long period of time or at a high temperature even when a magnetic tape thinned to 7 µm or less is used.

### BRIEF DESCRIPTION OF THE DRAWINGS

FIG. 1 is a drawing illustrating a reel with magnetic tape wound thereon in an embodiment of the invention.
FIG. 2 is an exploded perspective view of one embodiment of a magnetic tape cartridge.
FIG. 3 is a drawing illustrating a magnetic recording and reproducing device.

### DETAILED DESCRIPTION OF THE INVENTION

The following will describe an embodiment for carrying out the invention. In the following embodiment, as a magnetic tape cartridge, there is described an example of application to a single reel magnetic tape cartridge represented by a magnetic recording medium for a data recorder for computers.

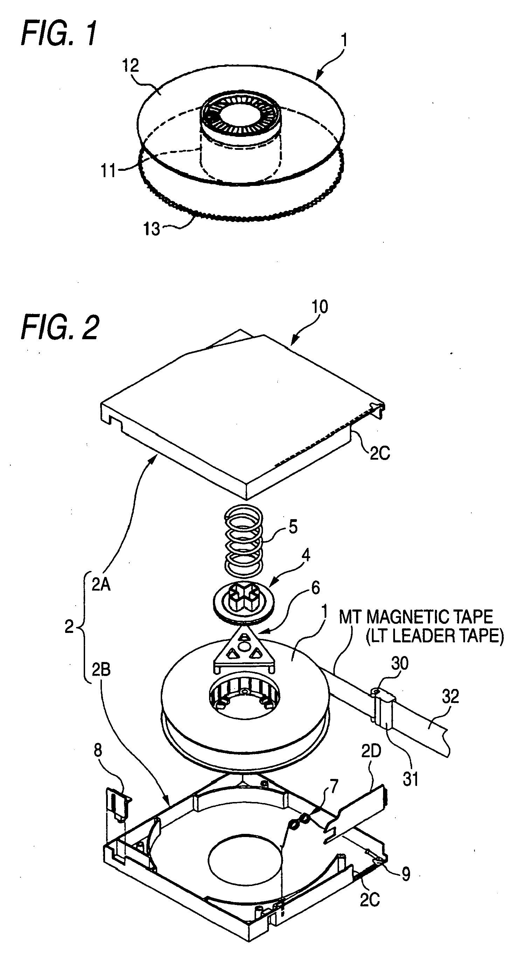

FIG. 1 is a drawing illustrating a reel with magnetic tape wound thereon (hereinafter referred to as "tape reel") in an embodiment of the invention.

In FIG. 1, a tape reel 1 is constituted by a nearly cylindrical reel hub 11, on the circumference of which a magnetic tape is wound, and a pair of upper and lower flanges 12, 13 which are provided at upper end and lower end of the reel hub 11 in the form of a sword guard and regulate the positions of both tape edges of the magnetic tape wound on the above reel hub 11 to restrict the migration of the magnetic tape in the cross direction.

The invention is characterized in that the reel hub 11 is formed from a highly rigid material having a flexural rigidity of 5000 MPa or more. The flexural rigidity in the invention means flexural rigidity measured in accordance with ASTM D790 (23°C). Furthermore, the flexural rigidity is preferably from 5000 to 7000 MPa, more preferably from 5500 to 6500 MPa.

The above highly rigid material is not particularly limited but includes those obtained by mixing a rigidity-imparting filler with resin materials such as polycarbonate (PC), ABS, POM, and PS.

Examples of the above filler includes granular fillers, flaky fillers, and fibrous fillers. The granular fillers include typically conductive carbon and the flaky fillers include aluminum flakes, nickel flakes, nickel-coated mica, and the like. Moreover, the fibrous flakes include various fibers of carbon, glass, aluminum, copper, brass, stainless steel, and the like. Of these, the fibrous fillers are preferable, and carbon fibers, glass fibers, and the like are more preferable. The mixing ratio of these fillers is preferably from 10 to 40 parts by weight relative to 100 parts by weight of the resin material.

In this connection, one or both of a pair of the upper and lower flanges 12, 13 are preferably formed from a highly rigid material.

As is well known in the art, the tape reel 1 in the invention can be produced by integrally molding either one of a pair of the upper and lower flanges 12, 13 to the reel hub 11 using a known molding technology and subjecting the other one to ultrasonic welding.

The following will describe one embodiment of the magnetic tape cartridge of the invention. FIG. 2 is an exploded perspective view of one embodiment of a magnetic tape cartridge.

As shown in FIG. 2, a magnetic tape cartridge 10 is based on LTO standard and has a cartridge case 2 which is dividedly constituted by a lower half 2B and an upper half 2A. The inside of the cartridge case 2 is constituted by a single tape reel 1 on which a magnetic tape MT is wound beforehand, a reel lock 4 and a compression coil spring 5 for maintaining rotation of the tape reel in a locked state, a release pad 6 for releasing the locked state of the tape reel 1, a slide door 2D which opens and shuts a magnetic tape-drawing outlet 2C formed at one side of the cartridge case 2 laid across the lower half 2B and the upper half 2A, a helical torsion spring 7 which biases the slide door 2D to a closed position of the magnetic tape-drawing outlet 2C, a wrong erase-preventing pawl 8, a reader pin-housing part 9 formed in the vicinity of the magnetic tape-drawing outlet 2C, and the like. A leader tape LT is joined to the head part of the magnetic tape MT. The magnetic tape MT shown in FIG. 2 represents the leader tape LT.

Subsequently, the following will describe one example of a magnetic recording and reproduction device provided with the magnetic tape cartridge 10 as mentioned above and a method of magnetic recording and reproduction.

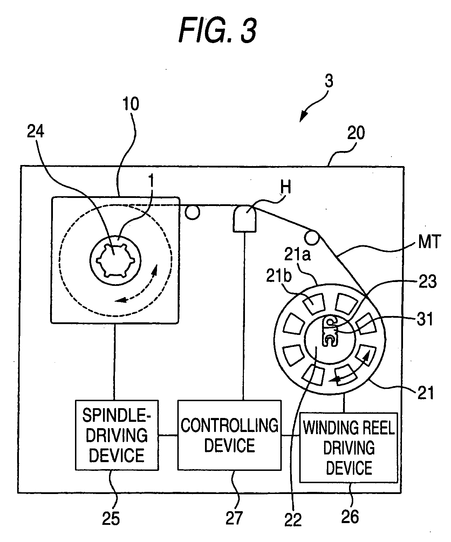

As shown in FIG. 3, the magnetic recording and reproduction device 3 is constituted by the magnetic tape cartridge 10 and magnetic tape drive 20. Such a magnetic recording and reproduction device records information on the magnetic tape MT and reproduces information recorded on the magnetic MT with winding up the magnetic tape MT wound on the magnetic tape cartridge 10 as a magnetic tape on a drive reel 21 of the magnetic tape drive 20 as a receiving side or with rewinding the magnetic tape MT wound on the drive reel 21 to the tape reel (delivery reel) 1.

The magnetic tape cartridge 10 is, as shown in FIG. 3, loaded into the magnetic tape drive 20, the leader tape LT is drawn out by a leader block 31, the above leader block 31 is put in a concave part 23 provided at a core part 22 of the drive reel 21 in the magnetic tape drive 20. Thereby, it becomes possible to wind the leader tape LT of the magnetic tape cartridge 10 on a core part 22 of the drive reel 21.

The magnetic tape drive 20 is provided with a spindle 24, a spindle-driving device 25 for driving the spindle 21, a magnetic head H, a winding reel-driving device 26 for driving the drive reel 21, and a controlling device 27.

Moreover, the magnetic tape drive 20 has the leader block 31 capable of catching leader pin 30 (see, FIG. 2) provided on the head part of the leader tape LT of the above magnetic tape cartridge 10 and the leader block 31 is transferred to the magnetic tape cartridge 10 side by a drawing-out mechanism containing a drawing-out guide 32 and the like, which is not shown in the figure.

At recording/reproduction of data on the magnetic tape MT, the spindle-driving device 25 and the winding reel-driving device 26 transfers the magnetic tape MT by rotating and driving the spindle 24 and the drive reel 21.

The spindle-driving device 25 and the winding reel-driving device 26 are driven by a control of the controlling device 27 and the spindle 24 and the drive reel 21 are rotated to the same direction so that the leader tape LT and the magnetic tape MT are transferred from the spindle 24 toward the drive reel 21. Thereby, the leader tape LT is wound on the drive reel 21 and then recording of information on the magnetic tape MT or reproduction of the information recorded on the magnetic tape MT is effected while the magnetic tape MT is wound on the drive reel 21.

The magnetic recording and reproduction are possible at a linear recording density of 100 kfci or more, preferably 130 kfci or more and a difference between a recording track width (preferably 10 µm or less) and a reproduction track width (preferably 5 µm or less) of 0 to 5 µm, preferably 1 to 5 µm.

The following will describe the magnetic tape to be used in an embodiment of the invention. The magnetic tape is a tape, thickness of which is thinned to 7 µm or less, preferably from 4.8 to 6.8 µm. Thus, by thinning the magnetic tape, an amount of medium capable of being housed in the tape reel is increased.

The magnetic tape to be used in the invention preferably has a constitution that a coated film layer containing a nonmagnetic layer and a magnetic layer in this order is provided on a polymer support.

### [Polymer support]

Examples of the polymer support to be used in the invention include polyethylene naphthalate, polyethylene terephthalate, polyamides (inclusive of aromatic polyamides), polyimides, polyamideimides, and polybenzoxazoles. Preferably, there are mentioned polyesters composed of dicarboxylic acids and diols, such as polyethylene terephthalate and polyethylene naphthalate.

As the dicarboxylic acid component which is a main constitutional component in the polyester, there are mentioned terephthalic acid, isophthalic acid, phthalic acid, 2,6-naphthalenedicarboxylic acid, 2,7-naphthalenedicarboxylic acid, diphenyl-sulfone-dicarboxylic acid, diphenyl-ether-dicarboxylic acid, diphenylethanedicarboxylic acid, cyclohexanedicarboxylic acid, diphenyldicarboxylic acid, diphenyl-thioether-dicarboxylic acid, diphenyl-ketone-dicarboxylic acid, and phenylindandicarboxylic acid.

Moreover, as the diol component in the polyester, there are mentioned ethylene glycol, propylene glycol, tetramethylene glycol, cyclohexanedimethanol, 2,2-bis(4-hydroxyphenyl)propane, 2,2-bis(4-hydroxyethoxyphenyl)propane, 2,2-bis(4-hydroxyphenyl) sulfone, bisphenol-fluorene-dihydroxyethyl ether, diethylene glycol, neopentyl glycol, hydroquinone, and cyclohexanediol.

Of the polyesters using these compounds as main constituting components, in view of transparency, mechanical strength, dimensional stability, and the like, polyesters using, as main constituting components, terephthalic acid and/or 2,6-naphthalenedicarboxylic acid as the dicarboxylic acid component and ethylene glycol and/or 1,4-cyclohexanedimethanol as the diol component are preferred.

Of these, preferred are polyesters containing polyethylene terephthalate or polyethylene-2,6-naphthalate as a main constituting component, copolyesters composed of terephthalic acid and 2,6-naphthalenedicarboxylic acid and ethylene glycol, and mixtures of two or more of these polyesters as the main component. Particularly preferred are polyesters containing polyethylene-2,6-naphthalate as the main component.

The polyesters constituting biaxially oriented polyester films may be those further copolymerized with the other copolymerizable component(s) or may be mixed with the other polyester(s). As examples of these polyesters, there may be mentioned the dicarboxylic acid components and diol components mentioned above and polyesters obtained form them.

In the polyesters to be used in the invention, in order to prevent delamination at the film, an aromatic dicarboxylic acid having a sulfonate group or an ester-forming derivative thereof, a dicarboxylic acid having a polyoxyalkylene group or an ester-forming derivative thereof, or a diol having a polyoxyalkylene group may be copolymerized.

Of these, in view of polymerization reactivity and transparency of the film, preferred are 5-sodium sulfoisophthalate, 2-sodium sulfoterephthalate, 4-sodium sulfophthalate, 4-sodium sulfo-2,6-naphthalenedicarboxylate, and compounds where the sodium thereof is replaced by the other metal (e.g., potassium, lithium, etc.), ammonium, phosphonium, or the like or ester-forming derivatives thereof, polyethylene glycol, polytetramethylene glycol, polyethylene glycol-polypropylene glycol copolymers and compounds where the hydroxyl groups at both ends are converted into carboxyl groups by oxidation or the like. For the purpose, the ratio to be copolymerized is preferably from 0.1 to 10% by mol based on the dicarboxylic acid constituting the polyester.

Moreover, for the purpose of improving thermal stability, a bisphenol A compound or a compound having a naphthalene ring or a cyclohexane ring can be copolymerized. The copolymerization ratio of them is preferably from 1 to 20% by mol based on the dicarboxylic acid constituting the polyester.

The method for synthesizing the polyester to be used in the invention is not particularly limited and the polyester can be produced according to hitherto known methods for producing polyesters. For example, there may be used a direct esterification method wherein a dicarboxylic acid component is directly esterified with a diol component and an ester-exchange method wherein polymerization is carried out by using a dialkyl ester as a dicarboxylic acid component to effect an ester-exchange reaction between the ester and a diol component and heating the mixture under reduced pressure to remove an excess of the diol component. At that time, if necessary, an ester-exchange catalyst or a polymerization catalyst can be used or a heat stabilizer can be added.

Moreover, each process at the synthesis, there may be added one or two or more of various additives such as an anticolorant, an antioxidant, a crystal-nucleating agent, a lubricant, a stabilizer, a antiblocking agent, a UV absorber, a viscosity-controlling agent, a defoaming-clearing agent, an antistatic agent, a pH adjuster, a dye, a pigment, and a reaction terminator. They may be used at production of polymer support other than polyesters.

As the polymer support in the invention, sensing pin-type three-dimensional surface roughness SRa (A) of the side on which a magnetic layer is provided (Side A) is preferably from 1 to 6 nm, more preferably from 1.5 to 5.5 nm. By keeping SRa (A) within this range, running durability can be ensured and also a high output can be maintained when a magnetic tape is formed therefrom.

As the polymer support in the invention, sensing pin-type three-dimensional surface roughness SRa (B) of the back side (Side B) of the side on which a magnetic layer is provided is preferably from 6 to 10 nm, more preferably from 6.5 to 9.0 nm. By keeping SRa (B) within this range, the friction coefficient is kept low and handling properties of the film is ensured as well as there is suppressed a phenomenon that the roughness of Side B is set off or transferred to Side A to roughen Side A at the time when a film having a magnetic layer is wound on a roll.

Side B may be as it is or may be provided with a back layer.

In the invention, SRa (A) and SRa (B) mean values measured in accordance with JIS B 0601 using a sensing pin-type three-dimensional surface roughness gauge.

The polymer which forms Side A of the polymer support in the invention desirably contains fine particles having an average particle size of usually 30 to 150 nm, preferably 40 to 100 nm in an amount of 0.1% by weight or less, preferably 0.06% by weight or less. In view of durability of the magnetic layer, it is desirable to incorporate the above fine particles. As the fine particles, there can be preferably used silica, calcium carbonate, alumina, polyacrylic particles, or polystyrene particles.

Furthermore, also from the viewpoint of a film-forming step of the polymer support, a production step of the magnetic tape, and running properties of the tape, it is preferable that Side B of the polymer support in the invention is rougher than Side A.

The method of roughening Side B is not particularly limited but preferred is a method of laminating two kinds of polymer layers having two types of polymer layers different in kind, average particle size and/or content of the fine particles, to each other. As the method for laminating the polymer layers, a coextrusion method is preferably used. At that time, the thickness of the polymer layer forming Side B is preferably from 1/2 to 1/10 of the thickness of total film. Examples of the fine particles to be used in the polymer layer forming Side B include calcium carbonate, silica, alumina, polystyrene particles, silicone resin particles, and the like. The average particle size is preferably from 80 to 800 nm, more preferably from 100 to 700 nm and the amount to be added is preferably from 0.05 to 1.0% by weight, more preferably from 0.08 to 0.8% by weight.

The laminated polymer support in the invention is preferably a laminated polyester film and can be produced according to hitherto known methods. For example, using a known extruder, a polymer which forms Side A and a polymer which forms Side B are laminated in a die and extrude into a sheet from a mouthpiece at a temperature of a melting temperature (Tm) to Tm+70°C and then rapidly cooled and solidified at 40 to 90°C to obtain a laminated unstretched film. Thereafter, the unstretched film is monoaxially stretched at a temperature of (glass transition point (Tg) - 10) to (Tg + 70) °C at a magnification of 2.5 to 4.5 times, preferably 2.8 to 3.9 times according to a usual method, then stretched to the direction perpendicular to the above direction at a temperature of TG to (Tg + 70)°C. at a magnification of 4.5 to 8.0 times, preferably 4.5 to 6.0 times, and, if necessary, further again stretched to longitudinal and/or cross directions to obtain a biaxially stretched film. Namely, it is suitable to conduct a two-stage, three-stage, four-stage, or multistage stretching. The total stretching magnification is usually 12 times or more, preferably from 12 to 32 times, more preferably 14 to 2.6 times as an area stretching magnification. Subsequently, by subjecting the biaxially oriented film to thermal fixing and crystallization at a temperature of (Tg + 70) to (Tm - 10)°C, for example, 180 to 250°C, an excellent dimensional stability is imparted. In this connection, the thermal fixing time is preferably from 1 to 60 seconds. It is preferable to release it to longitudinal and/or cross directions at a ratio of 3.0% or less, further 0.5 to 2.0% by the thermal fixing treatment to control a thermal shrinking ratio.

In the case that the polymer support in the invention is a mono-layer, it is obvious that the support can be also produced in accordance to the method of the above laminated polymer support.

In the invention, the strength at break of the polymer support is from 380 to 460 MPa, preferably from 390 to 450 MPa, and by keeping the strength at break within the above range, the strength of the polymer support can be secured and also slit properties at a slit step can be secured.

In the invention, the Young's modulus of the polymer support in the longitudinal direction is from 7.0 to 8.6 GPa, preferably 7.2 to 8.5 GPa, and the Young's modulus of the polymer support in the cross direction is from 6.0 to 8.6 GPa, preferably 6.0 to 8.4 GPa.

By keeping the Young's modulus in the longitudinal and cross directions within the above ranges, head contact is secured and also dimensional stability is secured, so that tracking under a high temperature and a high humidity is maintained.

In particular, when the Young's modulus in the longitudinal direction exceeds 8.6 GPa, head contact becomes insufficient. When the Young's modulus in the cross direction is less than 6.0 GPa, dimensional stability is insufficient and size of the magnetic tape changes under a high temperature and a high humidity, so that tracking is difficult to maintain.

In the magnetic tape in the invention, as a ferromagnetic metal powder containing a magnetic layer, it is preferable to use a powder having an average major axis length of 20 to 100 nm.

The ferromagnetic metal powder is known to be excellent in high-density magnetic recording properties and hence a magnetic tape having an excellent magnetic parametric performance can be obtained. The average major axis length of the ferromagnetic metal powder to be used in the magnetic layer of the magnetic tape in the invention is from 20 to 100 nm but is preferably from 30 to 90 nm, more preferably from 30 to 60 nm. When the average major axis length of the ferromagnetic metal powder is 20 nm or more, decrease of the magnetic properties can be effectively suppressed by thermal fluctuation. Moreover, when the average major axis length is 100 nm or less, a good C/N (S/N) can be obtained with maintaining a low noise.

The average major axis length of the ferromagnetic metal powder can be determined from an average value measured by combining a method of taking a picture of the ferromagnetic metal powder by transmission electron microscope and directly reading out the major axis length and a minor axis length of the ferromagnetic metal powder on the picture and a method of reading them by tracing a transmission electron microscopic picture by means of an image analyzing apparatus KS400 manufactured by Carl Zeiss Co.

The following will describe a layer constitution of the magnetic tape. With regard to the magnetic tape-in the invention, its layer constitution is not particularly limited as far as it has at least one magnetic layer on at least one surface of the polymer support. For example, a nonmagnetic layer may be provided between the polymer support and the magnetic layer. Moreover, on the opposite surface of the polymer support, a back layer may be provided, if necessary. Furthermore, the magnetic tape in the invention may be provided with a lubricant coated film and various coated films for magnetic layer-protection, if necessary. In addition, between the polymer support and the magnetic layer or nonmagnetic layer, an undercoat layer (easily adhesive layer) can be provided.

It is sufficient for the magnetic tape in the invention to have the magnetic layer on one side of the polymer support, but the magnetic layer can be also provided on both sides.

In the constitution comprising a nonmagnetic layer (lower layer) and a magnetic layer (upper layer), after the lower layer is applied, the upper magnetic layer can be provided while the lower layer is in a wet state (W/W) or even after the layer is dried (W/D). In view of production yield, simultaneous or sequential wet application is preferable. Since the upper layer/lower layer with a laminated layer constitution of the invention can be simultaneously formed by the simultaneous or sequential wet application (W/W), a surface treating process such as a calender process can be effectively utilized and thus the surface roughness of the upper magnetic layer can be improved even in the case of an ultrathin layer.

The following will describe the constituting factors of the magnetic tape in the invention in more detail.

### [Magnetic layer]

### <Ferromagnetic metal powder>

The ferromagnetic metal powder to be used in the magnetic layer of the magnetic tape in the invention is not particularly limited as far as it contains Fe as a main component (inclusive of an alloy), but a ferromagnetic alloy powder containing α-Fe as a main component is preferred. These ferromagnetic powders may contain atoms such as Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, and B in addition to predetermined atoms. Preferred are those containing at least one of Al, Si, Ca, Y, Ba, La, Nd, Co, Ni, and B in addition to α-Fe and particularly preferred are those containing Co, Al, and Y. Specifically, those containing from 10 to 40 atom % of Co, from 2 to 20 atom % of Al, and from 1 to 15 atom % of Y relative to Fe are preferred.

The above ferromagnetic metal powder may be pretreated with a dispersant, a lubricant, a surfactant, an antistatic agent, or the like to be mentioned below before dispersing. Moreover, the ferromagnetic metal powder may contain a small amount of water, a hydroxide, or an oxide. The water content of the ferromagnetic metal powder is preferably from 0.01 to 2%. It is preferred to optimize the water content depending on the kind of a binder. The pH of the ferromagnetic metal powder is preferably optimized depending on the combination of the binder to be used. Its range is usually from 6 to 12, preferably from 7 to 11. Furthermore, the ferromagnetic metal powder may contain soluble inorganic ions such as Na, Ca, Fe, Ni, Sr, NH₄, SO₄ Cl, NO₂, NO₃ in some cases. It is preferable that these ions are essentially not present. When the total of the respective ions is about 30 ppm or less, the properties are not affected. In addition, the ferromagnetic metal powder to be used in the invention preferably has less pores and its value is preferably 20% by volume or less, more preferably 5% by volume or less.

The crystallite size of the ferromagnetic metal powder is preferably from 8 to 20 nm, more preferably from 10 to 18 nm, particularly preferably from 12 to 16 nm. The crystalline size is an average value determined by Scherrer method from half band width of a diffraction peak under conditions of radiation source: CuKα1, tube voltage: 50 kV, and tube current: 300 mA using an X-ray diffraction apparatus (RINT 2000 series manufactured by Rigaku Corporation).

The specific surface area by BET method (S_{BET}) of the ferromagnetic metal powder is preferably from 30 to 50 m²/g, more preferably from 38 to 48 m²/g. Within this range, good surface properties and a low noise can be compatible. The pH of the ferromagnetic metal powder is preferably optimized depending on the combination of the binder to be used. Its range is from 4 to 12, preferably from 7 to 10. The ferromagnetic metal powder may be subjected to surface treatment with Al, Si, O or an oxide thereof, if necessary. The amount is from 0.1 to 10% based on the ferromagnetic metal powder and the surface treatment is preferable since the absorption of the lubricant such as a fatty acid is thereby decreased to 100 mg/cm² or less. There is a case that the ferromagnetic metal powder contains soluble inorganic ions such as Na, Ca, Fe, Ni, and Sr, but when the content thereof is 200 ppm or less, the properties may hardly be affected. Moreover, the ferromagnetic metal powder to be used in the invention preferably has less pores and its value is preferably 20% by volume or less, more preferably 5% by volume or less.

Moreover, the shape of the ferromagnetic metal powder may be any of needle-like, granular, rice-grain-like, or plate-like one as far as the shape satisfies the properties of particle size shown above, but particularly, it is preferred to use a needle-like ferromagnetic metal powder. In the case of a needle-like ferromagnetic metal powder, the aspect ratio id preferably from 4 to 12, more preferably from 5 to 12. The coercive force (Hc) of the ferromagnetic metal powder is preferably from 159.2 to 238.8 kA/m (from 2000 to 3000 Oe), more preferably from 167.2 to 230.8 kA/m (from 2100 to 2900 Oe). The saturated magnetic flux density thereof is preferably from 150 to 300 mT (from 1500 to 3000 G), more preferably from 160 to 290 mT. The saturation magnetization (σs) is preferably from 80 to 120 A·m²/kg (from 80 to 140 emu/g), more preferably from 90 to 120 A·m²/kg (from 80 to 140 emu/g). The SFD (switching field distribution) of the magnetic substance itself is preferably small and is preferably 0.8 or less. When the SFD is 0.8 or less, the magnetic parametric performance is satisfactory, the output is high, and flux reversal is sharp and peak shift decreases, so that the case is suitable for high-density digital magnetic recording. In order to decrease the Hc distribution, there are methods of improving particle size distribution of geothite, of using monodisperse αFe₂O₃, and of preventing sintering between particles in the ferromagnetic metal powder.

As the ferromagnetic metal powder, there can be used those obtained by known production methods, and the following methods may be mentioned. The methods include a method of reducing hydrous iron oxide or iron oxide subjected to sinter-preventing treatment with a reducing gas such as hydrogen to obtain Fe or Fe-Co particles, a method of reducing composite organic acid salts (mainly oxalate salt) with a reducing gas such as hydrogen, a method of thermal decomposition of a metal carbonyl compound, a method of reducing a ferromagnetic metal aqueous solution by adding a reducing agent such as sodium borohydride, a hypophosphorite salt, or hydrazine, a method of vaporizing a metal in a low-pressure inert gas to obtain a powder, and the like method. The ferromagnetic metal powder thus obtained is subjected to a known slow oxidation treatment. A method of reducing hydrous iron oxide or iron oxide with a reducing gas such as hydrogen to form an oxidation film on the surface by controlling partial pressures of an oxygen-containing gas and an inert gas, temperature and time is preferable owing to little demagnetization.

### <Ferromagnetic hexagonal ferrite powder>

Examples of ferromagnetic hexagonal ferrite powder include barium ferrite, strontium ferrite, lead ferrite, calcium ferrite, and Co substitutes thereof. More specifically, there may be mentioned magnetoplumbite-type barium ferrite and strontium ferrite, magnetoplumbite-type ferrites whose particle surface is covered with spinel, magnetoplumbite-type barium ferrite and strontium ferrite partially containing a spinel phase, and the like. In addition to the determined atoms, Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge, Nb, and the like atoms may be contained. In general, those incorporated with elements such as Co-Zn, Co-Ti, Co-Ti-Zr, Co-Ti-Zn, Ni-Ti-Zn, Nb-Zn-Co, Sb-Zn-Co, or Nb-Zn can be employed. Moreover, there are those containing peculiar impurities depending on the starting materials and the production method.

The particle size of the ferromagnetic hexagonal ferrite powder is, as an average plate diameter, from 5 to 40 nm, preferably from 10 to 38 nm, more preferably from 15 to 36 nm. Moreover, the average plate thickness is from 1 to 30 nm, preferably from 2 to 25 nm, more preferably from 3 to 20 nm. The average plate ratio {average value of (plate diameter/plate thickness)} is from 1 to 15, more preferably from 1 to 7. When the average plate ratio is from 1 to 15, a sufficient orientation is obtained with maintaining a high filling property in the magnetic layer and an increase of noise can be suppressed by stacking between particles. Furthermore, the specific surface area by BET method within the above range of the particle size is from 10 to 200 m²/g. The specific surface area is almost coincident with the calculated value from the plate diameter and plate thickness of the particles.

The distribution of the plate diameter and plate thickness of the particles of the ferromagnetic hexagonal ferrite powder is usually preferably narrow. The digitalization of the plate diameter and plate thickness of the particles can be compared by randomly measuring 500 particles from a particle TEM photograph. The distribution of the plate diameter and plate thickness of the particles is not a normal distribution in many cases but when represented by standard deviation relative to the average size on calculation, the ratio of σ/average size is from 0.1 to 2.0. In order to sharpen the particle size distribution, it is performed to make the particle forming reaction system homogeneous as far as possible and also to subject the formed particles to a distribution-improving treatment. For example, a method of selectively dissolving ultrafine particles in an acid solution and the like method are also known.

The coercive force (Hc) of the hexagonal ferrite particles can be in the range of 159.2 to 238.8 kA/m (from 2000 to 3000 Oe), and preferred is from 175.1 to 222.9 kA/m (from 2200 to 2800 Oe), more preferred is from 183.1 to 214.9 kA/m (from 2300 to 2700 Oe). however, when the saturation magnetization (σs) exceeds 1.4 T, the coercive force is preferably 159.2 kA/m or less. The coercive force (Hc) can be controlled by the particle size (plate diameter, plate thickness), the kinds and amounts of the contained elements, the substituted sites of the elements, the particle-forming reaction conditions, and the like.

The saturation magnetization (σs) of the hexagonal ferrite particles is from 40 to 80 A·m²/kg (emu/g). The saturation magnetization (σs) is preferably high as far as possible, but there is a tendency that finer particles may have a smaller value. In order to improve the saturation magnetization (σs), it is well known to form a composite of a magnetoplumbite ferrite with a spinel ferrite or to select kinds of contained elements and amounts thereof to be added. Moreover, it is also possible to use a W type hexagonal ferrite. At dispersing a magnetic substance, it has also been performed to treat the surface of magnetic substance particles with a dispersing medium or a substance compatible to a polymer. As the surface-treating agent, an inorganic compound or an organic compound is employed. Representative examples of the principal compounds include oxides or hydroxides of Si, Al, P, and the like, various silane-coupling agents, and various titanium coupling agents. The amount to be added is from 0.1 to 10% by weight relative to the magnetic substance. The pH of the magnetic substance is also important for dispersion. The pH is usually from about 4 to 12 and pH of 6 to 12 is selected in view of chemical stability and storage stability of the medium although an optimum value exists depending on the polymer. The water content in the magnetic substance also influences on dispersion. Although there exists an optimum value depending on the dispersing medium and the polymer, usually a content of 0.01 to 2.0% is selected.

As the methods for producing the ferromagnetic hexagonal ferrite powder, there are (1) a glass-crystallization method wherein barium oxide, iron oxide, a metal oxide replacing iron, and boron oxide or the like as a glass-forming substance are mixed so as to be a desired ferrite composition, then they are melted and rapidly cooled to form an amorphous material, and after subjected to re-heating treatment, the amorphous material is washed and pulverized to obtain a barium ferrite crystal powder, (2) a hydrothermal reaction method wherein a metal salt solution with a barium ferrite composition is neutralized with an alkali and, after by-products are removed, the solution is heated at 100°C or higher in a liquid phase, then washed, dried, and pulverized to obtain a barium ferrite crystal powder, (3) a co-precipitation method wherein a metal salt solution with a barium ferrite composition is neutralized with an alkali and, after by-products are removed, the solution is dried, treated at 1100°C or lower, and pulverized to obtain a barium ferrite crystal powder, and the like method, but any of the methods may be suitable in the invention. The ferromagnetic hexagonal ferrite powder may be subjected to surface treatment with A1, Si, P, or an oxide thereof, if necessary. The amount is from 0.1 to 10% relative to the ferromagnetic powder and the surface treatment is preferable since the adsorption of the lubricant such as a fatty acid decreases to 100 mg/m². There is a case that the ferromagnetic powder contains soluble inorganic ions such as Na, Ca, Fe, Ni, and Sr. It is preferable that these ions are essentially not present. When the total content is 200 ppm or less, the properties are hardly affected.

### <Binder>

The binder to be used in the magnetic layer of the invention is a hitherto known thermoplastic resin, a thermosetting resin, a reactive resin, and a mixture thereof. Examples of the thermoplastic resin include polymers or copolymers containing vinyl chloride, vinyl acetate, vinyl alcohol, maleic acid, acrylic acid, an acrylate ester, vinylidene chloride, acrylonitrile, methacrylic acid, a methacrylate ester, styrene, butadiene, ethylene, vinyl butyral, vinyl acetal, vinyl ether, and the like as constituting units, polyurethane resins, and various rubber resins.

Moreover, examples of the thermosetting resin or the reactive resin include phenol resins, epoxy resins, polyurethane curable resins, urea resins, melamine resins, alkyd resins, acrylic reactive resins, formaldehyde resins, silicone resins, epoxy-polyamide resins, mixtures of polyester resins and isocyanate prepolymers, mixtures of polyester polyols and polyisocyanates, mixtures of polyurethanes and polyisocyanates, and the like. All of the thermoplastic resins, thermosetting resins, and reactive resins are described in detail in "Plastic Handbook" published by Asakura Shoten.

Furthermore, when an electron beam-curable resin is used as the magnetic layer, not only coated film strength is enhanced and durability is improved but also the surface is smoothened and the magnetic parametric performance is further enhanced. These examples and the production methods thereof are described in detail in JP-A-62-256219.

The above resin can be used solely or in combination. Of these, use of the polyurethane resin is preferable and furthermore, it is preferable to use a polyurethane resin obtained by reacting a cyclic structure such as bisphenol A or a bisphenol A propylene oxide adduct, a polyol having an alkylene oxide chain and a molecular weight of 500 to 5000, a polyol having a cyclic structure and a molecular weight of 200 to 500 as a chain-extending agent, and an organic diisocyanate and introducing a polar group, or a polyurethane resin obtained by a polyester polyol composed of an aliphatic dibasic acid such as succinic acid, adipic acid, or sebacic acid and an aliphatic diol having an alkyl branched chain and no cyclic structure, such as 2,2-dimethyl-1,3-propanediol, 2-ethyl-2-butyl-1,3-propanediol, or 2,2-diethyl-1,3-propanediol, an aliphatic diol having a branched alkyl side chain having 3 or more carbon atoms, such as 2-ethyl-2-butyl-1,3-propanediol or 2,2-diethyl-1,3-propanediol as an chain-extending agent, and an organic diisocyanate compound and introducing a polar group, or a polyurethane resin obtained by reacting a cyclic structure such as a dimer diol, a polyol compound having a long alkyl chain, and an organic diisocyanate compound and introducing a polar group.

The average molecular weight of the polyurethane resin containing a polar group to be used in the invention is preferably from 5,000 to 100,000, more preferably from 10,000 to 50,000. When the average molecular weight is 5,000 or more, decrease in physical properties, such as brittleness of the resulting coated film are not observed and durability of the magnetic tape is not affected, so that the case is preferable. Moreover, when the molecular weight is 100,000 or less, solubility in a solvent does not decrease, so that dispersibility is satisfactory. Additionally, the viscosity of a coating material at a predetermined concentration does not increase, so that workability is satisfactory and handling is easy.

Examples of the polar group contained in the above polyurethane resins include -COOM, -SO₃M, -OSO₃M, - P=O(OM)₂, -O-P=O(OM)₂ (wherein M is a hydrogen atom or an alkali metal base), -OH, -NR₂, -NR⁺R₃ (wherein R is a hydrocarbon group), an epoxy group, -SH, -CN, and the like. Those into which at least one of these polar groups is introduced by copolymerization or an addition reaction can be used. Moreover, in the case that the polyurethane resin containing the polar group has an OH group, it is preferable to have a branched OH group in view of curability and durability. It is preferable to have 2 to 40 branched OH groups per one molecule, and it is more preferable to have 3 to 20 branched OH groups per one molecule. Furthermore, the amount of such a polar group is from 10⁻¹ to 10⁻⁸ mol/g, preferably from 10⁻² to 10⁻⁶ mol/g.

Specific examples of the binder include VAGH, VYHH, VMCH, VAGF, VAGD, VROH, VYES, VYNC, VMCC, XYHL, XYSG, PKHH, PKHJ, PKHC, and PKFE manufactured by Union Carbide, MPR-TA, MPR-TA5, MPR-TAL, MPR-TSN, MPR-TMF, MPR-TS, MPR-TM, and MPR-TAO manufactured by Nisshin Kagaku Kogyo K.K., 1000W, DX80, DX81, DX82, DX83, and 100FD manufactured by Denki Kagaku Kogyo K.K., MR-104, MR-105, MR110, MR100, MR555, 400X-110A manufactured by Zeon Corporation, Nipporan N2301, N2302, and N2304 manufactured by Nippon Polyurethane Industry Co., Ltd., Pandex T-5105, T-R3080, T-5201, Vernock D-400, D-210-80, and Krisbon 6109, 7209 manufactured by Dainippon Ink And Chemicals, Inc., Bairon UR8200, UR8300, UR-8700, RV530, RV280 manufactured by Toyobo Co., Ltd., Daiferamin 4020, 5020, 5100, 5300, 9020, 9022, and 7020 manufactured by Dainichiseika Colour & Chemicals Mfg. Co., Ltd., MX5004 manufactured by Mitsubishi Kasei Corp., Sanplen SP-150 manufactured by Sanyo Chemical Industries, Ltd., Saran F310 and F210 manufactured by Asahi Kasei Corporation, and the like.

The amount of the binder to be used in the magnetic layer of the invention is in the range of 5 to 50% by weight, preferably 10 to 30% by weight relative to the weight of the ferromagnetic metal powder. In the case that a polyurethane resin is used, it is preferably used in an amount of 2 to 20% by weight, and a polyisocyanate is preferably used in an amount of 2 to 20% by weight in combination. For example, in the case that corrosion of the head occurs by the action of a minute amount of dechlorination, it is possible to use a polyurethane alone or a polyurethane and an isocyanate alone. In the case that vinyl chloride-based resin is used as the other resin, the range of 5 to 30% by weight is preferable. In the invention, in the case of using a polyurethane, it preferably has a glass transition temperature of 50 to 150°C, preferably 90 to 120°C, an elongation at break of 100 to 2000%, a stress at break of 0.49 to 98 MPa (0.05 to 10 kg/mm²), a yield point of 0.49 to 98 MPa (0.05 to 10 kg/mm²).

The magnetic tape to be used in the invention can be constituted by two or more layers on one side of the polymer support. Therefore, needless to say, the amount of the binder, the resin amount of vinyl chloride-based resin, the polyurethane resin, the polyisocyanate, or the other resins in the binder, the molecular weights of individual resins forming the magnetic layer, the amount of the polar group, or physical properties of the resins mentioned above can be changed in each of the nonmagnetic layer and individual magnetic layers, if necessary, and rather, should be optimized in individual layers. For the purpose, known technologies on multi-layered magnetic layers can be applied. For example, in the case that the amount of the binder is changed in each layer, it is effective to increase the amount of the binder in the magnetic layer for reducing scuffs on the surface of the magnetic layer and it is possible to impart flexibility by increasing the amount of the binder in the nonmagnetic layer for improving head touch toward the head.

Examples of the polyisocyanate usable in the invention include isocyanates such as tolylene diisocyanate, 4,4'-diphenylmethane diisocyanate, hexamethylene diisocyanate, xylylene diisocyanate, naphthylene-1,5-diisocyanate, o-toluidine diisocyanate, isophorone diisocyanate, and triphenylmethane triisocyanate, products of these isocyanates with polyalcohols, polyisocyanates produced by condensation of isocyanates, and the like. The trade names of commercially available these isocyanates include Colonate L, Colonate HL, Colonate 2030, Colonate 2031, Milionate MR, and Milionate MTL manufactured by Nippon Polyurethane Industry Co., Ltd., Takenate D-102, Takenate D-110N, Takenate D-200, Takenate D-202 manufactured by Takeda Chemical Industries, Ltd., Desmodule L, Desmodule IL, Desmodule N. and Desmodule HL manufactured by Sumitomo Bayer, and the like. These compounds may be used solely or in combination of two or more of them utilizing the difference of curing reactivity in individual layers.

To the magnetic layer in the invention, additives can be added, if necessary. As the additives, there may be mentioned an abrasive, a lubricant, a dispersant/disperse aid, an antifungal agent, an antistatic agent, an antioxidant,'a solvent, carbon black, and the like. As these additives, there can be used, for example, molybdenum disulfide, tungsten disulfide, graphite, boron nitride, graphite fluoride, silicone oil, silicones having a polar group, fatty acid-modified silicones, fluorine-containing silicones, fluorine-containing alcohols, fluorine-containing esters, polyolefins, polyglycols, polyphenyl ethers, aromatic ring-containing organophosphonic acids such as phenylphosphonic acid, benzylphosphonic acid, phenethyl phosphonic acid, α-methylbenzylphosphonic acid, 1-methyl-1-phenetylphosphonic acid, diphenylmethylphosphonic acid, biphenylphosphonic acid, benzylphenylphosphonic acid, α-cumylphosphonic acid, toluylphosphonic acid, xylylphosphonic acid, ethylphenylphosphonic acid, cumenylphosphonic acid, propylphenylphosphonic acid, butylphenylphosphonic acid, heptylphenylphosphonic acid, octylphenylphosphonic acid, and nonylphenylphosphonic acid and alkali metal salts thereof, alkylphosphonic acids such as octylphosphonic acid, 2-ethylhexylphosphonic acid, isooctylphosphonic acid, isononylphosphonic acid, isodecylphosphonic acid, isoundecylphosphonic acid, isododecylphosphonic acid, isohexadecylphosphonic acid, isooctadecylphosphonic acid, and isoeicosylphosphonic acid and alkali metal salts thereof, aromatic phosphate esters such as phenyl phosphate, benzyl phosphate, phenethyl phosphate, α-methylbenzyl phosphate, 1-methyl-l-phenethyl phosphate, α-cumyl phosphate, toluyl phosphate, xylyl phosphate, ethylphenyl phosphate,cumenyl phosphate, propylphenyl phosphate, butylphenyl phosphate, heptyl phosphate, octylphenyl phosphate, and nonylphenyl phosphate and alkali metal salts thereof, phosphoric acid alkyl esters such as octyl phosphate, 2-ethylhexyl phosphate, isodecyl phosphate, isohexadecyl phosphate, isooctadecyl phosphate, isoeicosyl phosphate and alkali metal salts thereof, alkylsulfonate esters and alkali metal salts thereof, fluorine-containing alkyl sulfate esters and alkali metal salts thereof, monobasic fatty acids having 10 to 24 carbon atoms which may have an unsaturated bond and may be branched, such as lauric acid, myristic acid, palmitic acid, stearic acid, behenic acid, butyl stearate, oleic acid, linoleic acid, linolenic acid, elaidic acid, erucic and acid and metal salts thereof, mono-fatty acid esters, di-fatty acid esters, or polyvalent fatty acid esters composed of monobasic fatty acids having 10 to 24 carbon atoms which may have an unsaturated bond and may be branched and any one of monohydric to hexahydric alcohols having 2 to 22 carbon atoms which may have an unsaturated bond and may be branched, alkoxyalcohols having 12 to 22 carbon atoms which may have an unsaturated bond and may be branched, or monoalkyl ethers of alkylene oxide polymers, such as butyl stearate, octyl stearate, amyl stearate, isooctylstearate, octyl myristate, butyl laurate, butoxyethyl stearate, anhydrosorbitan monostearate, and anhydrosorbitan tristearate, fatty acid amides having 2 to 22 carbon atoms, aliphatic amines having 8 to 22 carbon atoms, and the like. Moreover, those having, in addition to the above hydrocarbon groups, an alkyl group, aryl group, or aralkyl group substituted by groups other than hydrocarbon groups, such as a nitro group and F, Cl, Br, halogen-containing hydrocarbons such as CF₃, CCl₃, and CBr₃ may be used.

In addition, there can be used nonionic surfactants such as alkylene oxide-based ones, glycerin-based ones, glycidol-based ones, and alkylphenol-ethylene oxide adducts, catinonic surfactants such as cyclic amines, ester amides, quaternary ammonium salts, hydantoin derivatives, heterocyles, and phosphoniums or sulfoniums, anionic surfactants containing acidic groups such as carboxylic acid, sulfonic acid, sulfate ester group, amphoteric surfactants such as amino acids, amino sulfonic acids, sulfate or phosphate esters of amino alcohols, and alkylbetains, and the like. These surfactants are described in detail in "Kaimen Kassei Zai Binran" (published by Sangyo Tosho K.K.).

The above lubricant, antistatic agent, and the like may be not necessarily pure and may contain impurities such as isomers, unreacted matter, by-products, decomposition products, and oxidation products. These impurities are preferably in an amount of 30% by weight, more preferably 10% by weight or less.

Examples of these additives include NAA-102, caster oil-hydrogenated fatty acid, NAA-42, cation SA, Nymeen L-201, Nonion E-208, Anon BF, Anon LG: manufactured by NOF Corporation; FAL-205, FAL-123: manufactured by Takemoto Oil & Fat Co., Ltd.; Enujelve OL manufactured by New Japan Chemical Co., Ltd.; TA-3 manufactured by Shin-Etsu Chemical Co., Ltd.; Armide P manufactured by Lion-Armour Co., Ltd.; Duomine TDO manufactured by Lion Corp.; BA-41G manufactured by Nisshin Oilio Group Ltd.; Profan 2012E, Newpol PE61, Ionet MS-400 manufactured by Sanyo Chemical Industries, Ltd.; and the like.

Moreover, to the magnetic layer in the invention, carbon black can be added, if necessary. As carbon black usable in the magnetic layer, there may be mentioned furnace for rubber, thermal for rubber, black for color, acetylene black, and the like. Preferably, the specific surface area is from 5 to 500 m²/g, DBP oil-absorbing amount is from 10 to 400 ml/100 g, particle diameter is from 5 to 300 nm, pH is from 2 to 10, water content is from 0.1 to 10%, and tap density is from 0.1 to 1 g/ml.

Specific examples of the carbon black to be used in the invention include BLACK PEARLS 200, 1300, 100, 900, 905, 800, 700, VULCAN XC-72 manufactured by Cabot Corp.; #80, #60, #55, #50, #35 manufactured by Asahi Carbon Co., Ltd.; #2400B, #2300, #900, #1000, #30, #40, #10B manufactured by Mitsubishi Kasei Corp.; CONDUCTEX SC, RAVEN150, 50, 40, 15, RAVEN-MT-P manufactured by Columbian Carbon; Ketjen Black EC manufactured by Japan EC; and the like. The carbon black may be used after surface treatment with a dispersant or grafting with a resin or one where part of the surface is graphitized may be used. Moreover, the carbon black may be dispersed with a dispersant prior to the addition to a magnetic coating material. The carbon black can be used solely or in combination. In the case of using carbon black, it is preferably used in an amount of 0.1 to 30% by weight relative to the weight of the ferromagnetic powder. Carbon black has functions of preventing static electrification, reducing friction coefficient, imparting light blocking effect, and improving film strength, which depends on the carbon black used. Therefore, these carbon blacks to be used in the invention can be, needless to say, used appropriately depending on the purposes based on the various properties shown previously, such as particle size, oil-absorbing amount, electric conductivity, and pH, with changing the kind, amount, and combination in each of the magnetic layers and the nonmagnetic layers and rather optimization thereof should be achieved. The carbon black usable in the magnetic layer of the invention can be selected with reference to, for example, "Carbon Black Binran" edited by Carbon Black Kyokai.

The organic solvent to be used in the invention may be any known solvents and examples thereof include ketones such as acetone, methyl ethyl ketone, methyl isobutyl ketone, diisobutyl ketone, cyclohexanone, isophorone, and tetrahydrofuran; alcohols such as methanol, ethanol, propanol, butanol, isobutyl alcohol, isopropyl alcohol, and methylcyclohexanol; esters such as methyl acetate, butyl acetate, isobutyl acetate, isopropyl acetate, ethyl lactate, and glycol acetate; glycol ethers such as glycol dimethyl ether, glycol monoethyl ether, and dioxane; aromatic hydrocarbons such as benzene, toluene, xylene, cresol, and chlorobenzene; chlorinated hydrocarbons such as methylene chloride, ethylene chloride, carbon tetrachloride, chloroform, ethylene chlorohydrin, and dichlorobenzene; N,N-dimethylformamide, hexane, and the like, which may be used in any ratio.

These organic solvents may be not necessarily 100% pure and may contain impurities such as isomers, unreacted matter, by-products, decomposition products, oxidation products, and water. These impurities are preferably in an amount of 30% by weight, more preferably 10% by weight or less. The kind of the organic solvents is preferably the same both in the magnetic layer and the nonmagnetic layer. The amount to be added may be changed. It is essential to enhance application stability using a solvent having a high surface tension for the nonmagnetic layer, and specifically, it is essential that the arithmetic average of solvent composition of the upper layer is not lower than the arithmetic average of solvent composition of the nonmagnetic layer. In order to enhance dispersibility, it is preferable to use a solvent having a some strong polarity and a solvent having an dielectric constant of 15 or more is preferably contained in a ratio of 50% or more in the solvent composition. Moreover, the solubility parameter is preferably from 8 to 11.

These dispersant, lubricant, and surfactant to be used in the invention can be appropriately used in the magnetic layer and further in the nonmagnetic layer to be mentioned below, the kinds and amounts being determined according to need. For example, although not limited to the examples illustrated herein, a dispersant has a property of adsorbing or binding to a polar group and thus it adsorbs or binds mainly to the surface of the ferromagnetic metal powder in the magnetic layer and mainly to the surface of the nonmagnetic powder via the above polar group. For example, it is inferred that the organophosphorus compound once adsorbed is difficult to desorb from the surface of the metal or metal compound. Therefore, since the surface of the ferromagnetic metal powder or the surface of the nonmagnetic powder is in such a state that the surface is covered with an alkyl group, an aromatic group, or the like, affinity to the binder resin component of the ferromagnetic metal powder or the nonmagnetic powder is enhanced and further, dispersion stability of the ferromagnetic metal powder or the nonmagnetic powder is also improved. Moreover, as a lubricant, since it is present in a free state, it is considered that exudation to the surface is controlled using fatty acids different in melting point in each of the nonmagnetic layer and the magnetic layer, exudation to the surface is controlled by using esters different in boiling point and polarity, application stability is enhanced by controlling the amount of the surfactant, and a lubrication effect is enhanced by increasing the amount of the lubricant in the nonmagnetic layer. Furthermore, all or part of the additives to be used in the invention may be added at any steps during the production of the coating liquid for the magnetic layer or the nonmagnetic layer. For example, there are a case of mixing with the ferromagnetic powder prior to the kneading step, a case of addition at the kneading step of the ferromagnetic powder, the binder, and the solvent, a case of addition at the dispersing step, a case of addition after dispersion, a case of addition immediately before application, and the like.

### [Nonmagnetic layer]

The following will describe the nonmagnetic layer in detail. The magnetic tape in the invention may have a nonmagnetic layer containing a binder and a nonmagnetic powder on the polymer support. The nonmagnetic powder usable in the nonmagnetic layer may be an inorganic substance or an organic substance. Moreover, carbon black or the like may be also used. Examples of the inorganic substance include metals, metal oxides, metal carbonates, metal sulfates, metal nitrides, metal carbides, and metal sulfides.

Specifically, there may be used titanium oxides such as titanium dioxide, cerium oxide, tin oxide, tungsten oxide, ZnO, ZrO₂; SiO₂, Cr₂O₃, α-alumina having α-form ratio of 90 to 100%, β-alumina, γ-alumina, α-iron oxide, geothite, corundum, silicon nitride, titanium carbide, magnesium oxide, boron nitride, molybdenum disulfide, copper oxide, MgCO₃, CaCO₃ BaCO₃ SrCO₃ BaSO₄ silicon carbide, titanium carbide, and the like solely or in combination of two kinds thereof. Preferred are α-iron oxide and titanium oxide.

The shape of the nonmagnetic powder may be any of needle-like, spherical, polyhedral, or plate-like one. The crystallite size of the nonmagnetic powder is preferably from 4 nm to 1 µm, more preferably from 40 to 100 nm. When the crystallite size is in the range of 4 nm to 1 µm, dispersion does not become difficult and the resulting layer has a suitable surface roughness, so that the case is preferable. The average particle size of these nonmagnetic powders is preferably from 5 nm to 2 µm but, if necessary, a similar effect can be achieved by combining nonmagnetic powders having different average particle sizes or by broaden the particle size distribution even when a sole nonmagnetic powder is used. Particularly preferable average particle size of the nonmagnetic powder is from 10 to 200 nm. When the size is in the range of 5 nm to 2 µm, the dispersion is satisfactory and the resulting layer has a suitable surface roughness, so that the case is preferable.

The specific surface area of the nonmagnetic powder is from 1 to 100 m²/g, preferably from 5 to 70 m²/g, more preferably from 10 to 65 m²/g. When the specific surface area is in the range of 1 to 100 m²/g, the resulting layer has a suitable surface roughness and the powder can be dispersed with a desired amount of the binder, so that the case is preferable. The oil-absorbing amount using dibutyl phthalate (DBP) is from 5 to 100 ml/100 g, preferably from 10 to 80 ml/100 g, more preferably from 20 to 60 ml/100 g. The specific gravity is from 1 to 12, preferably from 3 to 6. The tap density is from 0.05 to 2 g/ml, preferably from 0.2 to 1.5 g/ml. When the tap density is in the range of 0.05 to 2 g/ml, flying particles are little and thus the operation is easy as well as there is a tendency that the particles hardly adhered to the apparatus. The pH of the nonmagnetic powder is preferably from 2 to 11 and particularly preferred is in the range of 6 to 9. When the pH is in the range of 2 to 11, the friction coefficient does not increase under a high temperature or a high humidity or by the release of the fatty acid. The water content of the nonmagnetic powder is from 0.1 to 5%by weight, preferably from 0.2 to 3% by weight, more preferably from 0.3 to 1.5% by weight. When the water content is in the range of 0.1 to 5% by weight, the dispersion is satisfactory and the viscosity of the coating material after dispersion becomes also stable, so that the case is preferable. The ignition loss is preferably 20% by weight or less, and those having a small ignition loss are preferable.

Moreover, in the case that the nonmagnetic powder is an inorganic powder, a powder having Mohs' hardness of 4 to 10 is preferable. When Mohs' hardness is in the range of 4 to 10, durability can be secured. The stearic acid-absorbing amount of the nonmagnetic powder is from 1 to 20 µmol/m², more preferably from 2 to 15 µmol/m². The heat of wetting of the nonmagnetic powder to water at 25°C is in the range of 200 to 600 erg/cm² (200 to 600 mJ/m²). Furthermore, a solvent having a heat of wetting of this range can be employed. The number of water molecules on the surface at 100 to 400°C is adequately from 1 to 10 molecules/100 Å. The pH at isoelectric point in water is preferably in the range of 3 to 9. On the surface of the nonmagnetic powder, the presence of Al₂O₃, SiO₂, TiO₂, ZrO₂, SnO₂ SbO₃, or ZnO through surface treatment is preferable. Particularly preferred for dispersibility are Al₂O₃, SiO₂, TiO₂ and ZrO₂, and more preferred are Al₂O₃, SiO₂, and ZrO₂. They may be used in combination or may be used solely. In addition, according to purposes, coprecipitated surface treated layer may be used or a method of first treating the surface with alumina and then treating the surface layer with silica or a method of treating the surface in a reverse manner may be adopted. The surface treated layer may be a porous layer depending on the purpose, but a homogeneous and dense layer is generally preferable.

Specific examples of the nonmagnetic powder to be used in the nonmagnetic layer of the invention include Nanotite manufactured by Showa Denko K.K., HIT-100, ZA-G1 manufactured by Sumitomo Chemical Co., Ltd., DPN-250, DPN-250BX, DPN-245, DPN-270BX, DPB-550BX, DPN-550RX manufactured by Toda Kogyo Corporation, titanium oxide TTO-51B, Tto-55A, Tto-55B, TTO-55C, TTO-55S, TTO-55D, SN-100, MJ-7, α-iron oxide E270, E271, E300 manufactured by Ishihara Sangyo Kaisha, Ltd., STT-4D, STT-30D, STT-30, STT-65C manufactured by Titan Kogyo K.K., MT-100S, MT-100T, MT-150W, MT-500B, T-600B, T-100F, T-500HD manufactured by Teika, and the like. Also, there may be mentioned FINEX-25, BF-1, BF-10, BF-20, ST-M manufactured by Sakai Chemical Industry Co., Ltd., DEFIC-Y, DEFIC-R manufactured by Dowa Mining Co., Ltd., AS2BM, Ti02P25 manufactured by Japan Aerosil, 100A, 500A manufactured by Ube Industries, Ltd., Y-LOP manufactured by Titan Kogyo K.K., and calcinated products thereof. Particularly preferable nonmagnetic powders are titanium dioxide and α-iron oxide.

In the nonmagnetic layer, carbon black can be added together with the nonmagnetic powder to lower the surface electric resistance and decrease light transparency, whereby a desired micro-Vickers hardness can be also obtained. The micro-Vickers hardness of the nonmagnetic layer is usually from 25 to 60 kg/mm² (245 to 588 MPa), preferably from 30 to 50 kg/mm² (294 to 490 MPa) for adjusting head contact, the hardness being measured using a thin film hardness tester using a triangular pyramid needle made of diamond having an edge angle of 80° and a point diameter of 0.1 µm as an indenter tip. The light transmission is standardized that absorption of infrared ray having a wavelength of about 900 nm is generally 3% or less and, for example, is 0.8% or less for VHS magnetic tapes. For the purpose, furnace for rubber, thermal for rubber, black for color, acetylene black, and the like can be used.

The specific surface area of the carbon black to be used in the nonmagnetic layer of the invention is from 100 to 500 m²/g, preferably from 150 to 400 m²/g; DBP oil-absorbing amount is from 20 to 400 ml/100 g, preferably from 30 to 200 ml/100 g. The particle diameter of the carbon black is from 5 to 80 nm, preferably from 10 to 50 nm, more preferably from 10 to 40 nm. Preferably, the pH of the carbon black is from 2 to 10, the water content is from 0.1 to 10%, and the tap density is from 0.1 to 1 g/ml.

Specific examples of the carbon black to be used in the nonmagnetic layer of the invention include BLACK PEARLS 2000, 1300, 1000, 900, 800, 880, 700, VULCAN XC-72 manufactured by Cabot Corp.; #3050B, #3250B, #3750B, #3950B, #950, #650B, #970B, #850B, MA-600 manufactured by Mitsubishi Kasei Corp.; CONDUCTEX SC, RAVEN 8800, 8000, 1500, 1255, 1250 manufactured by Columbian Carbon; Ketjen Black EC manufactured by Akzo; and the like.

The carbon black may be used after surface treatment with a dispersant or grafting with a resin, or one where part of the surface is graphitized may be used. Moreover, the carbon black may be dispersed with a dispersant prior to the addition to a coating material. The carbon black can be used in an amount not more than 50% by weight relative to the above inorganic powder and in an amount not more than 40% by weight of total weight of the nonmagnetic layer. The carbon black can be used solely or in combination. The carbon black usable in the nonmagnetic layer of the invention can be selected with reference to, for example, "Carbon Black Binran" edited by Carbon Black Kyokai.

Moreover, an organic powder may be added to the nonmagnetic layer depending on purposes. Examples of the organic powder include acrylic styrene-based resin powders, benzoguanamine resin powders, melamine-based resin powders, and phthalocyanine-based pigments but polyolefin-based resin powders, polyester-based resin powders, polyamide-based resin powders, and polyethylene fluoride resin may be also used. As the production method, methods described in JP-A-62-18654 and JP-A-60-255827 can be employed.

As the binder resin, lubricant, dispersant, additives, solvent, dispersing method, and the like for the nonmagnetic layer, those for the magnetic layer can be adopted. In particular, with regard to the amount and kind of the binder resin, the amount and kind of the additives and dispersant, known techniques for the magnetic layer can be applied.

### [Back layer, undercoat layer]

In general, for the magnetic tape for computer data recording, a repetitive running ability is strongly required as compared with videotapes or audiotapes. In order to maintain such a high running durability, it is also possible to provide a back layer on the surface of the polymer support opposite to the surface on which the nonmagnetic layer and the magnetic layer are provided. As a coating material for the back layer, particle components such as an abrasive and an antistatic agent and a binder are dispersed in an organic solvent. As the particle components, various inorganic pigments and carbon black may be used. Moreover, as the binder, resins such as nitrocellulose, phenoxy resins, viny chloride-based resins, and polyurethanes may be used solely or as a mixture thereof.

On the polymer support of the invention, an adhesive layer may be further provided on the coated surface of the coating material for the magnetic layer and the coating material for the back layer. In addition, the magnetic tape of the invention may be provided with an undercoat layer. The adhesion strength between the polymer support and the magnetic layer or the nonmagnetic layer can be enhanced by providing the undercoat layer. As the undercoat layer, a polyester resin soluble in a solvent is employed. A layer having a thickness of 0.5 µm or less is used as the undercoat layer.

### [Layer constitution]

With regard to the thickness of the magnetic tape to be used in the invention, the polymer support preferably has a thickness of 3 to 6 µm. Moreover, in the case that an undercoat layer is provided between the polymer support and the magnetic layer or the nonmagnetic layer, the thickness of the undercoat layer is from 0.01 to 0.8 µm, preferably from 0.02 to 0.6 µm. Furthermore, the thickness of the back layer to be provided on the surface of the polymer support opposite to the surface on which the nonmagnetic layer and the magnetic layer are provided is from 0.1 to 1.0 µm, preferably from 0.2 to 0.8 µm.

The thickness of the magnetic layer is optimized depending on the saturation magnetization and head gap length of the magnetic head to be used and the band of recorded signals but is generally from 10 to 150 nm, preferably from 20 to 130 nm, more preferably from 30 to 110 nm. Moreover, the thickness fluctuation of the magnetic layer is preferably within ±50%, more preferably within ±40%. The magnetic layer can be one layer but may be separated into two layers or more having different magnetic properties, to which the constitution for known multi-layered magnetic layers can be applied.

The thickness of the nonmagnetic layer of the invention is from 0.5 to 2.0 µm, which is preferably from 0.8 to 1.5 µm, more preferably from 0.8 to 1.4 µm. In this connection, the nonmagnetic layer of the magnetic tape in the invention exhibits it effect when it is substantially nonmagnetic. For example, even when a small amount of a magnetic material is contained as an impurity or intentionally, the layer exhibits the effects of the invention and can be regarded as substantially the same constitution as in the case of the magnetic tape of the invention. In this regard, the term "substantially the same" means that the residual magnetic flux density of the nonmagnetic layer is 10 mT or less or the coercive force is 7.96 kA/m (100 Oe) or less and preferably, the layer has neither residual magnetic flux density nor coercive force.

### [Production method]

The steps for producing the magnetic layer-applying solution of the magnetic tape to be used in the invention comprises at least a kneading step, a dispersing step, and mixing steps provided before or after these steps according to need. Individual steps may be each separated into two or more stages. All the starting materials such as the ferromagnetic metal powder, nonmagnetic powder, binder, carbon black, abrasive, antistatic agent, lubricant, and solvent may be added at the beginning of or during any steps. Moreover, individual starting materials may be dividedly added in two or more steps. For example, a polyurethane may be charged dividedly in the kneading step, the dispersing step, and a mixing step for viscosity adjustment after dispersion. In addition, a conventional known production technique can be used as part of the steps. In the kneading step, it is preferable to use one having a strong kneading power, such as an open kneader, a continuous kneader, a pressure kneader, or an extruder. In the case of using a kneader, a magnetic powder or a nonmagnetic powder and all or part of a binder (preferably 30% or more of the total binder) are kneaded in an amount of 15 to 500 parts by weight relative to 100 parts by weight of the magnetic material. The detail of the kneading is described in JP-A-1-106338 and JP-A-1-79274. Moreover, in order to disperse a solution for magnetic layer and a solution for nonmagnetic layer, glass beads can be employed. As such glass beads, suitable are zirconia beads, titania beads, and steel beads which are dispersing media having a high specific gravity. The particle size and filling factor of these dispersing media are used after optimization. As a dispersing machine, known ones can be used.

In the method for producing a magnetic tape according to the invention, for example, a magnetic layer-applying solution is applied on the surface of a polymer support under running so as to form a magnetic layer having a predetermined film thickness. A plurality of magnetic layer-applying solutions may be applied sequentially or simultaneously to form a laminated layer, or a nonmagnetic layer-applying solution and a magnetic layer-applying solution may be applied sequentially or simultaneously to form a laminated layer. As a applicator for applying the above magnetic layer-applying solution and nonmagnetic layer-applying solution, there may be utilized an air doctor coat, a blade coat, a rod coat, an extrusion coat, an air knife coat, a squeeze coat, an impregnation coat, a reverse roll coat, a transfer roll coat, a gravure coat, a kiss coat, a cast coat, a spray coat, a spin coat, and the like. For detail of them, "Saishin Coating Gijutsu" (May 31, 1983) published by K.K. Sohgoh Gijutsu Center can be referred to.

In the case of a magnetic tape, the ferromagnetic metal powder in the coated layer of the magnetic layer-applying solution is subjected to a magnetic field orientation treatment in the longitudinal direction using a cobalt magnet or a solenoid. In the case of a disk, a sufficient isotropic orientation can be obtained in some cases without orientation using no orientation apparatus but use of a known random orientation apparatus, such as alternative oblique arrangement of cobalt magnets or application of alternative current magnetic field by a solenoid, is preferable. In the case of a ferromagnetic metal powder, generally, the isotropic orientation is preferably in-plane two-dimensional random one but it may be a three-dimensional random one with a vertical component. In the case of a hexagonal ferrite, it is apt to be in-plane or vertical three-dimensional random one but it is possible to form in-plane two-dimensional random one. Moreover, by effecting vertical orientation using a known method such as a heteropolar opposed magnet, a magnetic property isotropic in the circumferential direction can be imparted. In the case of high-density recording, the vertical orientation is particularly preferred. Furthermore, circumferential orientation can be achieved using a spin coat.

It is preferable to control the drying position of the coated film by controlling the temperature, airflow, and application rate of drying air. Preferably, the application rate is 20 m/minute to 1000 m/minute and the temperature of the drying air is 60°C or higher. In addition, an appropriate pre-drying may be performed before entering a magnet zone.

After drying, the coated layer is usually subjected to a surface-smoothing treatment. For the surface-smoothing treatment, a super calender roll or the like is utilized, for example. By conducting the surface-smoothing treatment, the voids generated by removing the solvent at drying disappear and the filling factor of the ferromagnetic metal powder in the magnetic layer is improved, so that a magnetic tape having a high magnetic parametric performance can be obtained. A roll for calender treatment, a heat-resistant plastic roll made of an epoxy, polyimide, polyamide, or polyamideimide is employed. It is also possible to treat it with a metal roll.

The magnetic tape in the invention has a surface having an excellent smoothness that an average roughness of central plane of the surface is in the range of 0.1 to 4 nm, preferably from 1 to 3 nm at a cutoff value of 0.25 mm. As the method therefor, a magnetic layer formed from selected specific ferromagnetic metal powder and binder is subjected to the above calender treatment as mentioned above. The calender treatment is preferably carried out under the following conditions: temperature of the calender roll ranging from 60 to 100°C, preferably from 70 to 100°C, particularly preferably from 80 to 100°C; pressure ranging from 100 to 500 kg/cm (98 to 490 kN/m), preferably from 200 to 450 kg/cm (196 to 441 kN/m), particularly preferably from 300 to 400 kg/cm (294 to 392 kN/m).

As a heat shrinkage-reducing means, there are a method of thermal treatment in a web form with handling at a low tension and a method of thermal treatment in a stacked form of tapes such as a bulk form or a form incorporated into a cassette (thermo treatment), and both methods can be utilized. From the viewpoint of supplying a magnetic tape of high output and low noise, the thermo treatment is preferred.

The resulting magnetic recording medium can be used after cutting it into a desired size using a cutting machine. The cutting machine is not particularly limited but preferred is one where a plurality of sets of a rotating upper cutting blade (male blade) and lower cutting blade (female blade) are provided. The slit speed, depth of contact, peripheral speed ratio of the upper cutting blade (male blade) to the lower cutting blade (female blade) (peripheral speed ratio of the upper cutting blade/peripheral speed ratio of the lower cutting blade), continuous use time of the slit cutting blade, and the like are suitably selected.

### [Physical properties]

The saturation magnification of the magnetic layer of the magnetic tape to be used in the invention is preferably from 100 to 300 mT. The coercive force (Hr) of the magnetic layer is preferably from 143.3 to 318.4 kA/m (from 1800 to 4000 Oe), more preferably from 159.2 to 278.6 kA/m (from 2000 to 3500 Oe). The distribution of the coercive force is preferably narrow and SFD and SFDr is 0.6 or less, more preferably 0.2 or less.

The friction coefficient of the magnetic tape to be used in the invention against a head is 0.5 or less preferably 0.3 or less at a temperature of -10 to 40°C and at a humidity ranging from 0 to 95%. Moreover, the surface specific resistance is preferably from 10⁴ to 10¹² **Ω**/sq on magnetic surface and band potential is preferably from -500 V to +500V. The elastic modulus of the magnetic layer at 0.5% elongation is preferably from 0.98 to 19.6 GPa (100 to 2000 kg/mm²) in in-plane each direction, the strength at break is preferably from 98 to 686 MPa (10 to 70 kg/mm²), the elastic modulus of the magnetic tape is preferably from 0.98 to 14.7 GPa (100 to 1500 kg/mm²) in in-plane each direction, the residual elongation is preferably 0.5% or less, the heat shrinkage at any temperature not higher than 100°C is preferably 1% or less, more preferably 0.5% or less, most preferably 0.1% or less.

The remaining solvent contained in the magnetic layer is preferably 100 mg/m² or less, more preferably 10 mg/m². The porosity having the coated layer is preferably 30% by volume or less, more preferably 20% by volume or less in both of the nonmagnetic layer and the magnetic layer. In order to achieve a high output, the porosity is desirably small but there is a case that the void ratio is suitably a certain value for some purposes. For example, in a disk medium where repeated use is regarded as important, a larger porosity is preferable for running durability in many cases.

Preferably, the maximum height of the magnetic layer SRₘₐₓ is 0.5 µm or less, the average roughness at ten points SRz is 0.3 µm or less, the peak height on the central plane SRp is 0.3 µm or less, the valley depth on the central plane SRv is 0.3 µm or less, the area rate of the central plane SSr is from 20 to 80%, and the average wavelength Sλa is from 5 to 300 µm. These values can be easily controlled by the control of surface properties with a filler of the polymer support and by the surface state of the roll at calender treatment. The curl is preferably within ±3 mm.

In the case that the magnetic tape of the invention is constituted by a nonmagnetic layer and a magnetic layer, the physical properties thereof can be changed by the nonmagnetic layer and magnetic layer, according to purposes. For example, the running durability can be enhanced by increasing the elastic modulus of the magnetic layer and simultaneously the head contact of the magnetic tape can be improved by decreasing the elastic modulus of the nonmagnetic layer.

Moreover, the glass transition temperature (local maximum point of loss modulus at dynamic viscoelasticity measurement measured at 110 Hz) of the coated layer in the magnetic tape of the invention is preferably from 50 to 110°C, more preferably from 60 to 95°C. Within this range, there is exhibited an effect that both of an enhanced film durability and a good head contact are achieved.

### [Examples]

The following will further describe the invention with reference to Examples and Comparative Examples but the invention is not limited to the following examples.

On one surface of a polyethylene naphthalate (PEN), a magnetic layer and a nonmagnetic layer having compositions mentioned below were formed in thickness of 0.1 µm and 1.0 µm, respectively. Moreover, on another surface of the PEN film, a coated film containing carbon black as a back layer was formed in thickness of 0.5 µm.

The compositions of the magnetic layer and the nonmagnetic layer are as follows.

### <Composition of coating material for magnetic layer>

| | |
|---|---|
| Fine ferromagnetic metal powder (average major axis length 0.045 µm) | 100 parts by weight |
| Polyester polyurethane resin (neopentyl glycol/caprolactone polyol/MDI = 0.9/2.6/1, containing 1×10⁻⁴ eq/g of -SO₃Na group) | 10 parts by weight |
| Vinyl chloride copolymer (containing 1×10⁻⁴ eq/g of -SO₃Na group, degree of polymerization 300) | 10 parts by weight |
| Butyl stearate | 1 part by weight |
| Methyl ethyl ketone | 20 parts by weight |
| Cyclohexanone | 20 parts by weight |
| Alumina powder (average particle size 0.2 µm) | 13 parts by weight |

### <Composition 1 of coating material for nonmagnetic layer>

| | |
|---|---|
| Nonmagnetic inorganic powder α-iron oxide; surface treatment layer: Al₂O₃, SiO₂ average major axis length: 0.15 µm, average aspect ratio: 7 | 85 parts by weight |
| Carbon black DBP oil-absorbing amount: 120 ml/100g, BET specific surface area (S_{BET}): 250 m²/g | 15 parts by weight |
| Vinyl chloride copolymer (containing 1×10⁻⁴ eq/g of -SO₃Na group, degree of polymerization 300) | 12 parts by weight |
| Polyester polyurethane resin (neopentyl glycol/caprolactone polyol/MDI, containing 1×10⁻⁴ eq/g of -SO₃Na group) | 5 parts by weight |
| Phenylphosphonic acid | 3 parts by weight |
| Cyclohexanone | 140 parts by weight |
| Methyl ethyl ketone | 170 parts by weight |
| Butyl stearate | 2 parts by weight |
| Stearic acid | 1 part by weight |

In the case of using Composition 1 of the coating material for nonmagnetic layer, the glass transition point of the coated film layer composed of the magnetic layer and the nonmagnetic layer at film formation was 60°C.

### <Composition 2 of coating material for nonmagnetic layer>

| | |
|---|---|
| Nonmagnetic inorganic powder α-iron oxide; surface treatment layer: Al₂O₃, SiO₂ average major axis length: 0.15 µm, average aspect ratio: 7 | 75 parts by weight |
| Carbon black DBP oil-absorbing amount: 120 ml/100g, BET specific surface area (S_{BET}) : 250 m²/g | 25 parts by weight |
| Vinyl chloride copolymer (containing 1×10⁻⁴ eq/g of -SO₃Na group, degree of polymerization 300) | 12 parts by weight |
| Polyester polyurethane resin (neopentyl glycol/caprolactone polyol/MDI, containing 1x10⁻⁴ eq/g of -SO₃Na group) | 5 parts by weight |
| Phenylphosphonic acid | 3 parts by weight |
| Cyclohexanone | 140 parts by weight |
| Methyl ethyl ketone | 170 parts by weight |
| Butyl stearate | 2 parts by weight |
| Stearic acid | 1 part by weight |

In the case of using Composition 2 of the coating material for nonmagnetic layer, the glass transition point of the coated film layer composed of the magnetic layer and the nonmagnetic layer at film formation was 45°C.

### <Composition of coating material for back layer>

### Kneaded product 1

| | |
|---|---|
| Carbon black A (particle size 40 nm) | 100 parts by weight |
| Nitrocellulose resin (RSI/2) | 50 parts by weight |
| Polyurethane resin (glass transition temperature: 50°C) | 40 parts by weight |

| Dispersant | |
|---|---|
| copper oleate | 5 parts by weight |
| copper phthalocyanine | 5 parts by weight |
| precipitated barium sulfate | 5 parts by weight |
| Methyl ethyl ketone | 500 parts by weight |
| Toluene | 500 parts by weight |

After the above was pre-kneaded in a roll mill,

### Kneaded product 2

| | |
|---|---|
| Carbon black B (SSA: 8.5 m²/g) | 100 parts by weight |
| Nitrocellulose resin (RSI/2) | 40 parts by weight |
| Polyurethane resin | 10 parts by weight |
| Methyl ethyl ketone | 300 parts by weight |
| Toluene | 300 parts by weight |

The above kneaded products 1 and 2 were dispersed in a sand grinder and, after the completion, the following was added.

| | |
|---|---|
| Polyester resin | 5 parts by weight |
| Polyisocyanate | 5 parts by weight |

The above was added to prepare a coating material for the back layer, which was applied after the coating material for the magnetic layer was applied and dried.

The above composition of coating material for magnetic layers and composition of coating material for nonmagnetic layers were each kneaded and then dispersed by means of a sand mill. Thereafter, the resulting compositions were filtrated through a filter having an average pore diameter of 1 µm to form a coating material for magnetic layer and a coating material for nonmagnetic layer. They were applied on a PEN film having a thickness shown in the following Table 1, and the resulting film was dried, subjected to calender treatment, and then cut into a 1/2-inch width to produce a magnetic tape.

### Evaluation method

Servo signals were recorded on the tape using a servo track writer on which a magnetic head using an MR element was mounted. Immediately after the recording head, a head for verifying was set and error signals immediately after the recording were measured.

Thereafter, 500 m of the tape was wound on a tape reel shown in FIG. 1. The cylindrical reel hub has a diameter of 44.1 mm. The diameter of the upper and lower flanges is 96.8 mm.

The reel hub shown in Table 2 was used. The material for the upper and lower flanges were the same as that of the reel hub.

A cartridge having the reel was stored at 60°C under 90%RH for one week. After temperature was returned to room temperature, serve error signals were again measured on the servo track writer using only the head for verifying and changes observed were compared.

Evaluation results are shown in Table 1 together with the results of Comparative Examples. In the Table 1, "good" means that the error signals are maintained at a sufficiently low level even after the storage. Namely, it means that the dimensional deformation of the magnetic tape is sufficiently prevented. Contrarily, "no good" means that the magnetic tape is distorted and thus the servo tracking is not functioned sufficiently. In this connection, the operating environment (temperature and humidity conditions) was 23°C/50%RH (relative humidity).

**Table 1**

| | Composition of coating material for nonmagnetic layer | Thickness of support (µm) | Total thickness of tape (µm) | Kind of reel hub | Error signals before storage (µm) | Error signals after storage (µm) | Judgment (servo) |
|---|---|---|---|---|---|---|---|
| Example 1 | 1 | 5.2 | 6.8 | B | 1.1 | 1.4 | good |
| Example 2 | 1 | 5.0 | 6.6 | B | 1.4 | 1.6 | good |
| Example 3 | 1 | 5.2 | 6.8 | C | 1.4 | 0.9 | good |
| Example 4 | 1 | 4.5 | 6.1 | C | 1.6 | 1.6 | good |
| Example 5 | 2 | 4.5 | 6.1 | B | 1.2 | 2.0 | good |
| Comparative Example 1 | 1 | 4.5 | 6.1 | A | 0.9 | impossible to measure | no good |
| Comparative Example 2 | 1 | 5.2 | 6.8 | D | 0.8 | 4.0 | no good |
| Comparative | 2 | 4.5 | 6.1 | D | 1.0 | impossible | no good |
| Example 3 | | | | | | to measure | |
| Comparative Example 4 | 2 | 5.2 | 6.8 | A | 1.2 | 5.0 | no good |
| Comparative Example 5 | 2 | 8.5 | 10.1 | A | 1.4 | 1.9 | good |

**Table 2 Kind of Reel Hub**

| No | Kind (material) | Flexural rigidity (MPa) |
|---|---|---|
| Reel A | Commercially available LTO reel (PC) glass fiber content: 8% | 4800 |
| Reel B | Carbon fiber-containing reel (PC) carbon fiber content: 10% | 5900 |
| Reel C | Glass fiber-containing reel (PC) glass fiber content: 20% | 5500 |
| Reel D | Commercially available S-DLT reel (PC) glass fiber content: 8% | 4650 |

From Table 1, it is obvious that the storage stability, especially dimensional stability of the magnetic tape was improved by forming the reel hub constituting the reel from a highly rigid material having a flexural rigidity of 5000 MPa or more. To the contrary, in the case that a reel hub formed from a material having a flexural rigidity of less than 5000 MPa, the result is poor in dimensional stability. Incidentally, servo quality is satisfactory in Comparative Example 5 but the capacity per magnetic tape cartridge is deficit since total thickness of the tape is so thick as 10 µm.

This application is based on Japanese Patent application JP 2004-288274, filed September 30, 2004, the entire content of which is hereby incorporated by reference. This claim for priority benefit is being filed concurrently with the filing of this application.

## Claims

1. A magnetic tape cartridge comprising: a magnetic tape; a reel on which the magnetic tape is wound; and a cartridge case in which the reel is rotatably housed,
wherein the magnetic tape has a thickness of 7 µm or less, and the reel comprises a reel hub formed from a highly rigid material having a flexural rigidity of 5000 MPa or more.

2. The magnetic tape cartridge according to claim 1, wherein the magnetic tape has a thickness of 4.8 to 6.8 µm.

3. The magnetic tape cartridge according to claim 1, wherein the highly rigid material has a flexural rigidity of 5000 to 7000 Mpa.

4. The magnetic tape cartridge according to claim 1, wherein the highly rigid material has a flexural rigidity of 5500 to 6500 Mpa.

5. The magnetic tape cartridge according to claim 1, wherein the highly rigid material comprises a rigidity-imparting filler and a resin material

6. The magnetic tape cartridge according to claim 5, wherein the resin material is selected from polycarbonate, ABS, POM, and PS.

7. The magnetic tape cartridge according to claim 5, wherein the rigidity-imparting filler is at least one of a granular filler, a flaky filler, and a fibrous filler.

8. The magnetic tape cartridge according to claim 5, wherein a mixing ratio of the rigidity-imparting filler is from 10 to 40 parts by weight relative to 100 parts by weight of the resin material.

9. The magnetic tape cartridge according to claim 1, wherein the cartridge further comprises an upper flange and a lower flange, and one or both of the flanges are made from the highly rigid material.

10. The magnetic tape cartridge according to claim 1, wherein the magnetic tape comprises: a polymer support; a coated film layer comprising a nonmagnetic layer and a magnetic layer on the support in this order.

11. The magnetic tape cartridge according to claim 10, wherein the magnetic layer comprises at least a ferromagnetic metal powder and a ferromagnetic hexagonal ferrite powder.

12. The magnetic tape cartridge according to claim 10, wherein the magnetic layer further comprises a binder.

13. The magnetic tape cartridge according to claim 10, wherein the nonmagnetic comprises a binder and a nonmagnetic powder on the polymer support.

14. The magnetic tape cartridge according to claim 10, wherein the magnetic tape further comprises a back layer on a surface of the polymer support opposite to the surface on which the nonmagnetic layer and the magnetic layer are provided.

15. The magnetic tape cartridge according to claim 14, wherein the magnetic tape further comprises an undercoat layer between the nonmagnetic layer and the magnetic layer.

16. The magnetic tape cartridge according to claim 10, wherein the coated film layer has a glass transition point of 50°C to 110°C.

17. The magnetic tape cartridge according to claim 10, wherein the coated film layer has a glass transition point of 60°C to 95°C.
